**Europäisches Patentamt**

**European Patent Office**

**Office européen des brevets**

(19)

(11) Veröffentlichungsnummer: **0 217 417**
**B1**

(12) **EUROPÄISCHE PATENTSCHRIFT**

(45) Veröffentlichungstag der Patentschrift:
**14.11.90**

(51) Int. Cl.⁵: **A01D 75/18**

(21) Anmeldenummer: **86113781.8**

(22) Anmeldetag: **04.10.86**

(54) Verfahren zum Erkennen von Fremdkörpern in landwirtschaftlichen Erntemaschinen.

(30) Priorität: **04.10.85 DD 281453**

(43) Veröffentlichungstag der Anmeldung:
**08.04.87 Patentblatt 87/15**

(45) Bekanntmachung des Hinweises auf die Patenterteilung:
**14.11.90 Patentblatt 90/46**

(84) Benannte Vertragsstaaten:
**AT BE CH DE FR GB IT LI NL SE**

(56) Entgegenhaltungen:
**EP-A- 0 152 291**
**DD-A- 110 413**
**DD-A- 114 893**
**DE-A- 3 213 713**
**GB-A- 1 602 475**

(73) Patentinhaber: **VEB KOMBINAT FORTSCHRITT LANDMASCHINEN, Berghausstrasse 1, DDR-8355 Neustadt in Sachsen(DD)**

(72) Erfinder: **Weiss, Burkhard, ASS 12, DDR-8701 Weigsdorf-Köblitz(DD)**
Erfinder: **Hauschild, Arthur, Hohnsteiner Strasse 17, DDR-8360 Sebnitz(DD)**
Erfinder: **Herrmann, Erich, Mittelweg 196, DDR-8351 Polenz(DD)**

(74) Vertreter: **Zipse + Habersack, Kemnatenstrasse 49, D-8000 München 19(DE)**

ACTORUM AG

## Beschreibung

Die Erfindung betrifft ein Verfahren zum Erkennen von in das Erntegut eingebetteten Fremdkörpern in landwirtschafltichen Erntemaschinen gemäß dem Oberbegriff von Anspruch 1.

Von Feldhäckslern her ist es bekannt (z.B. gemäß der DE-OS 2 252 595 und 2 552 805), metallische Fremdkörper zu orten, indem in der Fördervorrichtung ein spezielles Magnetfeld erzeugt wird. Beim Durchgang eines metallischen Fremdkörpers kommt es zur Magnetfeldänderung. Diese Änderung wird erfaßt, aufbereitet und als Steuersignal einer Stoppvorrichtung für die Fördervorrichtung zugeführt oder an eine Warneinrichtung weitergeleitet. Nachteilig an dieser Lösung ist, daß es trotz dieser Ortung zu Havarien durch nichtmetallische Fremdkörper, insbesondere durch Steine, kommen kann.

Aus diesem Grunde wurden verschiedene mechanische Verfahren entwickelt (z.B. nach DD-PS 110 413), bei denen in der Fördervorrichtung das Erntegut nach Fremdkörpern abgetastet wird. Diese Lösungen haben aber große funktionelle Nachteile für den Durchfluß des Erntegutes durch die Maschine und wurden deshalb in der Praxis nicht verwirklicht.

Diese Nachteile sollen durch die Lösung gemäß DE-OS 3 213 713 beseitigt werden. Hier wird in einer ortsfest gelagerten Zuführwalze der Fördervorrichtung der Schallpegel auf der Zuführwalze erfaßt, in elektrische Impulse umgeformt und an eine ortsfeste Datenerfassungs- und Auswerteeinheit übertragen, die dann eine Stoppvorrichtung ansteuert.

Mit dieser Lösung werden zwar nichtmetallische Fremdkörper erfaßt, aber in dem Falle, wo der Fremdkörper im Erntegutstrang eingebettet liegt und nicht in einen direkten Kontakt mit der Zuführwalze kommt, bleibt das Erkennungssignal aus, was wiederum zum Schaden an den Arbeitsaggregaten führen kann. Gleichzeitig ist dieses Verfahren in seiner praktischen Umsetzung schwer zu beherrschen, aufwendig und störanfällig, da maschinenbedingte Schallschwingungen von der Schallerfassungsstelle fern gehalten werden müssen und die Signalübertragung in einer aggressiven Umgebung von einem rotierenden Teil auf eine ortsfeste Nachfolgeeinrichtung erfolgen muß.

Aus der EP-A 0 152 291 ist eine weitere Lösung bekannt, bei der das lose und entsprechend der Mähbreite abgelegte Erntegut aufgenommen und dabei so stark beschleunigt wird, daß ein freier Wurf erfolgt. In der Wurfbahn befindet sich eine Leithaube, die je nach Erntegutmenge und -art über eine Federbelastung ausweichbar ist. Die Leithaube dient gleichzeitig als Prallblech zur Erkennung von Fremdkörpern. Hierzu nehmen piezoelektrische Geber oder ähnliche geeignete Meßmittel auf der Außenseite der Leithaube die durch den Aufprall entstandene hochfrequente Schwingung kleiner Amplitude auf. Da Fremdkörper eine größere Dichte als Erntegut besitzen, werden sie stärker gegen die Leithaube geschleudert. In einer elektrischen Schaltungsanordnung werden über Filter und Vergleichsschaltungen die von Fremdkörpern herrührenden Signale isoliert und zur Steuerung einer Ausscheideeinrichtung benutzt.

Auch dieses Verfahren funktioniert, ähnlich wie das Verfahren nach der DE-OS 3 213 713, nur, wenn die Fremdkörper in unmittelbaren Kontakt mit der Leithaube kommen, um ein spezifisches Aufschlagsgeräusch zu erzeugen. Damit ist das Verfahren an die spezielle Form des schnellrotierenden Aufnehmers und die Ablage des Erntegutes entsprechend der Mähbreite gebunden. Bei allgemein gebräuchlichen Schneidwerken und Aufnehmern, an die unmittelbar ein Querförderer anschließt, der wiederum den gebildeten Erntegutstrang an eine Zuführvorrichtung übergibt, ist es nicht möglich, eine Wurfstrecke für das Erntegut einzusetzen. In der Zuführvorrichtung ist ferner, wie bereits dargestellt, der Erntegutstrang durch die mehrfache Transportrichtungsänderung und die Zusammenführung auf die Breite des Arbeitsaggregates derart in sich verfilzt, daß keine Sicherheit besteht, daß eingebettete Fremdkörper an das Prallblech gelangen. Durch die vorliegende Erfindung soll hier Abhilfe geschaffen werden.

Deshalb liegt der Erfindung die Aufgabe zugrunde, ein Verfahren zum Erkennen von Fremdkörpern in landwirtschaftlichen Erntemaschinen mit einer Fördervorrichtung, die das Erntegut dem Arbeitsaggregat zuführt, und bei dem ein Signal zur Steuerung einer Stoppeinrichtung für die Fördervorrichtung oder für eine Warneinrichtung genutzt wird, zu schaffen, das mit wenigen Verfahrensschritten auskommt, gegenüber maschinenseitigen Störimpulsen und Umwelteinflüssen unempfindlich ist und auch die im Erntegutstrang eingebetteten Fremdkörper sicher erfaßt.

Erfindungsgemäß wird die Aufgabe dadurch gelöst, daß

a) das Erntegut senkrecht zu seiner Förderrichtung zusammengepreßt wird, indem ein bewegliches Element auf das Erntegut drückt;

b) die Beschleunigungswerte dieses Elementes entgegen der Preßrichtung erfaßt werden;

c) die Beschleunigungswerte, die kleiner als eine Ansprechschwelle sind, gelöscht werden, wobei die Ansprechschwelle durch die größten Beschleunigungswerte gebildet wird, die beim ungleichmäßigen Durchgang des Erntegutes ohne eingebettete Fremdkörper unter dem verschiebbaren Element entstehen;

d) die verbleibenden Beschleunigungswerte, die größer als die Ansprechschwelle sind und von eingebetteten Fremdkörpern im Erntegut herrühren, als Signal der Steuerung der Stoppvorrichtung oder der Wareneinrichtung zugeführt werden.

Das Erntegut wird gemäht oder vom Schwaden aufgenommen und mit der Fördervorrichtung in zusammengeführter Form dem Arbeitsaggregat zugeführt. Während dieses Fördervorganges wird durch das bewegliche Element, zum Beispiel eine Preßwalze, das Erntegut senkrecht zu seiner Förderrichtung zusammengepreßt.

Da das Erntegut nicht gleichmäßig vom Schneidwerk bzw. Aufnehmer an die Fördervorrichtung übergeben wird, weicht das verschiebbare Element je nach Erntegutmenge aus, wobei aber gleichzeitig eine Zusammenpressung des Erntegutes erfolgt. Es ergeben sich demzufolge unterschiedliche niedrige Beschleunigungswerte für das bewegliche Element. Ist ein Fremdkörper in das Erntegut eingebettet, so ist dieser durch das bewegliche Element nicht zusammenpreßbar und das Element muß innerhalb einer kurzen Zeit stark ausweichen. Damit entsteht eine Beschleunigungsspitze, die über den normalen Beschleunigungswerten bei Erntegut ohne Fremdkörper liegt. Diese Beschleunigungsdifferenz ist ein sicheres Anzeichen für den Durchgang eines Fremdkörpers und wird als Signal für die Steuerung der Stoppvorrichtung für die Fördervorrichtung oder für die Warneinrichtung genutzt wie es von der Metallortung her bekannt ist.

Hierfür ist es nach der Erfindung zweckmäßig, daß nur die Beschleunigungswerte erfaßt werden, die größer als die Ansprechschwelle sind und diese in einen elektrischen Spannungsimpuls umgeformt werden. Dies ist möglich, indem der Beschleunigungsaufnehmer so ausgebildet ist, daß er erst ab Beschleunigungswerten oberhalb der Ansprechschwelle reagiert. Für die einfache Weiterverarbeitung des Signales ist es ratsam, dieses sofort über z.B. ein induktives System in eine elektrische Spannung umzuformen.

Nach der Erfindung ist es aber auch möglich, daß in einem Beschleunigungsmesser eine der jeweiligen Beschleunigung proportionale elektrische Spannung erzeugt wird und diese mit der Ansprechschwelle, die in Form einer konstanten Spannung bestimmter Größe vorliegt, verglichen wird. Die Größe der konstanten Spannung entspricht dabei der Spannung des Beschleunigungsmessers, die bei den größten Beschleunigungen des beweglichen Elementes beim Durchgang von Erntegut ohne Fremdkörper abgegeben wird.

Mit dem erfindungsgemäßen Verfahren wird eine einfache, leicht zu verwirklichende Lösung zum Erkennen von Fremdkörpern aller Art für landwirtschaftliche Erntemaschinen dargestellt.

Dieses Verfahren kann mit gut kapselbaren und gegen Maschinen- und Umwelteinflüsse abschirmbaren Vorrichtungen, wie z.B. mit einem Beschleunigungsmesser und einer ortsfesten elektronsichen Auswerteeinheit, realisiert werden. Dabei ist eine hohe Sicherheit gegeben, daß alle Fremdkörper, die das Arbeitsaggregat beschädigen können, unabhängig von ihrer Lage, im Erntegut erfaßt werden. Ein weiterer positiver Effekt besteht darin, daß das erfindungsgemäße Verfahren sehr leicht mit den bekannten Metallortungsverfahren kombiniert werden kann, indem die Signale beider Erfassungseinrichtungen gemeinsam ausgewertet, weiterverarbeitet und der Steuerung einer Stoppvorrichtung zugeführt werden. Mit dieser Kombination ist ein allseitiger Schutz des Arbeitsaggregates verwirklicht, indem zusätzlich auch kleinste metallische Teile in die Erkennung einbezogen werden.

Im folgenden wird die Erfindung an einem Ausführungsbeispiel näher erläutert.

Bei einem Feldhäcksler wird das Erntegut vom Mähwerk geschnitten, über eine Querförderschnecke zusammengeführt und an eine Fördervorrichtung, die aus mehreren unteren, ortsfest gelagerten Zuführwalzen und oberen, senkrecht zur Förderrichtung beweglichen Zuführwalzen besteht, übergehen. Die oberen Zuführwalzen werden dabei in Richtung auf die unteren Zuführwalzen vorgespannt, so daß das Erntegut zwischen den oberen und unteren Zuführwalzen zusammengepreßt wird. Je nach übergebener Erntegutmenge weichen die oberen Zuführwalzen nach oben aus, da der Preßdruck annähernd konstant bleibt. Diese Ausweichbewegung erfolgt relativ langsam, da das Erntegut zusammenpreßbar ist. Wird vom Schneidwerk ein Fremdkörper, z.B. ein Stein, aufgenommen, so wird dieser in das Erntegut eingebettet. Gelangt dieser Erntegutabschnitt in den Bereich unter der ersten oberen Zuführwalze, so weicht diese schlagartig aus, da der Fremdkörper nicht zusammengepreßt werden kann.

Zum Erkennen des Fremdkörpers wird der Beschleunigungswert dieser ersten oberen Zuführwalze entgegen der Preßrichtung erfaßt. Im Falle des Durchganges eines Fremdkörpers ist der Beschleunigungswert größer als beim Durchgang einer Anhäufung reinen Erntegutes. Die Erfassungsvorrichtung ist dabei so ausgelegt, daß sie erst dann anspricht, wenn dieser größte Beschleunigungswert des reinen Erntegutes überschritten wird. Die erfaßten Beschleunigungswerte, die den Fremdkörper kennzeichnen, werden z.B. über die Feldstärkeänderung in einem induktiven System in ein elektrisches Signal umgeformt. Dieses elektrische Signal wird an eine Datenerfassungs- und Auswerteeinheit weitergeleitet, an der parallel dazu das Signal einer Metallortung anliegt. Das Ausgangssignal dieser Datenerfassungs- und Auswerteeinheit steuert dann eine Stoppvorrichtung für die Fördervorrichtung.

Es besteht aber auch die Möglichkeit, daß alle Bechleunigungswerte sofort in äquivalente elektrische Spannungen umgewandelt werden, die der Datenerfassungs- und Auswerteeinheit zugeführt werden. In der Datenerfassungs- und Auswerteeinheit wird eine konstante Vergleichsspannung erzeugt, die äquivalent dem größten Beschleunigungswert bei reinem Erntegut ohne Fremdkörper ist. Alle darunter liegenden eingehenden Spannungsimpulse werden gelöscht, die verbliebenen werden zur Steuerung der Stoppvorrichtung weiterverarbeitet und zu dieser geleitet.

Ist durch die Stoppvorrichtung die Fördervorrichtung stillgesetzt worden, kann der Fremdkörper entfernt werden oder die Fördervorrichtung wird reversiert, so daß der Teil des Erntegutes mit dem Fremdkörper aus der Fördervorrichtung ausgestoßen wird.

**Patentansprüche**

1. Verfahren zum Erkennen von in das Erntegut eingebetteten Fremdkörpern in landwirtschaftlichen Erntemaschinen mit einer Fördervorrichtung, die das Erntegut in zusammengeführter Form einem Arbeitsaggregat zugeführt und bei dem ein von den Fremdkörpern herrührendes Signal zur Steuerung einer Stoppvorrichtung für die Fördervorrichtung oder für eine Warneinrichtung genutzt wird, dadurch gekennzeichnet, daß

a) das Erntegut senkrecht zu seiner Förderrichtung zusammengepreßt wird, indem ein bewegliches Element auf das Erntegut drückt;

b) die Beschleunigungswerte dieses Elementes entgegen der Preßrichtung erfaßt werden;

c) die Beschleunigungswerte, die kleiner als eine Ansprechschwelle sind, gelöscht werden, wobei die Ansprechschwelle durch die größten Beschleunigungswerte gebildet wird, die beim ungleichmäßigen Durchgang des Erntegutes ohne eingebettete Fremdkörper unter dem verschiebbaren Element entstehen;

d) die verbleibenden Beschleunigungswerte, die größer als die Ansprechschwelle sind und von eingebetteten Fremdkörpern im Erntegut herrühren, als Signal der Steuerung der Stoppvorrichtung oder der Warneinrichtung zugeführt werden.

2. Verfahren nach Anspruch 1, dadurch gekennzeichnet, daß nur die Beschleunigungswerte erfaßt werden, die größer als die Ansprechschwelle sind und diese in einen elektrischen Spannungsimpuls umgeformt werden.

3. Verfahren nach Patentanspruch 1, dadurch gekennzeichnet, daß in einem Beschleunigungsmesser ein der jeweiligen Beschleunigung proportionale elektrische Spannung erzeugt wird und diese mit der Ansprechschwelle, die in Form einer konstanten Spannung bestimmter Größe vorliegt, verglichen wird.

**Claims**

1. A method for detecting foreign bodies embedded in harvest material in agricultural harvesting machines with a feeding device, which feeds the harvest material in a brought-together form to the working unit and where a signal induced by foreign bodies is used to stop the feeding device or to trigger an alarm device, characterized in that

a) the harvest material is compressed in a direction perpendicular to its feeding direction by means of a movable element pressing on the harvest material;

b) the acceleration of this element in counterpress direction is aquisited;

c) acceleration-values lower than a trigger-level remain unregistered, where the trigger-level is defined by the strongest acceleration-values which occur, when the passing of the harvest material under the movable element is irregular without embedded foreign bodies;

d) the remaining acceleration-values larger than the trigger-level and produced by embedded foreign bodies in the harvest material being conducted as a signal to the stopping device or alarm device.

2. The method of claim 1, characterized in that only acceleration-values larger than the trigger-level being aquisited and converted to an electric pulse.

3. The method of claim 1, characterized in that a voltage proportional to the actual acceleration is produced in an acceleration-meter and compared with a constant voltage of a certain value representing the trigger-level.

**Revendications**

1. Procédé de détection des corps étrangers noyés dans le produit récolté dans les machines agricoles de récolte comprenant un dispositif de déplacement qui amène le produit récolté concentré à un ensemble de travail, et dans lequel un signal provoqué par les corps étrangers est utilisé pour commander un dispositif d'arrêt du dispositif de déplacement ou pour un dispositif avertisseur, caractérisé par le fait que:

a) on comprime le produit récolté, perpendiculairement à sa direction de déplacement, du fait qu'un élément mobile exerce une pression sur le produit récolté;

b) on capte les valeurs de l'accélération de cet élément à l'encontre de la direction de pressage;

c) on efface les valeurs de l'accélération qui sont inférieures à un seuil de réponse, le seuil de réponse étant formé par les plus fortes valeurs de l'accélération qui prennent naissance lors du passage irrégulier sous l'élément mobile du produit récolté exempt de corps étrangers noyés;

d) les valeurs de l'accélération restantes, lesquelles sont supérieures au seul de réponse et sont provoquées par les corps étrangers noyés dans le produit récolté, sont amenées comme signal à la commande du dispositif d'arrêt ou du dispositif avertisseur.

2. Procédé selon la revendication 1, caractérisé par le fait que l'on capte seulement les valeurs de l'accélération qui sont supérieures au seuil de réponse, et que l'on transforme celles-ci en une impulsion de tension électrique.

3. Procédé selon la revendication 1, caractérisé par le fait qu'une tension électrique proportionnelle à chaque accélération est engendrée dans un accéléromètre, et que celle-ci est comparée au seuil de réponse qui est présent sous la forme d'une tension constante de valeur déterminée.